(19) Europäisches Patentamt

European Patent Office

Office européen des brevets

(11) **EP 1 201 707 A1**

(12) **DEMANDE DE BREVET EUROPEEN**

(43) Date de publication:
**02.05.2002 Bulletin 2002/18**

(51) Int Cl.⁷: **C08K 5/57**, C07F 7/22

(21) Numéro de dépôt: **01402645.4**

(22) Date de dépôt: **12.10.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **24.10.2000 FR 0013593**

(71) Demandeur: **Atofina**
**92800 Puteaux (FR)**

(72) Inventeur: **Hebrard, Muriel**
**69530 Brignais (FR)**

(74) Mandataire: **Treuil, Claude**
**Atofina**
**Département Propriété Industrielle**
**4-8 cours Michelet**
**La Défense 10**
**92091 Paris La Défense Cedex (FR)**

(54) **Composition à base de maléates d'organoétain, son procédé d'obtention et son utilisation pour stabiliser des polymeres thermoplastiques**

(57) L'invention concerne une composition de maléates d'organoétain susceptible d'être obtenue en faisant réagir un mélange d'un alcool ou d'un époxyalcane avec l'anhydride et/ou l'acide maléique puis en mettant en contact le milieu ainsi obtenu avec un oxyde de dialkylétain.

L'invention concerne également les formulations à base de résines thermoplastiques notamment de polychlorure de vinyle (PVC) stabilisées à l'aide de ladite composition à base de maléates d'organoétain ainsi que les objets rigides ou souples, expansés ou non et les plastisols formés à partir desdites formulations.

## Description

La présente invention a pour objet une composition à base de maléates d'organoétain ainsi que son procédé d'obtention.

L'invention concerne également des formulations à base de résines thermoplastiques stabilisées à l'aide de ladite composition à base de maléates d'organoétain et plus particulièrement les formulations à base de polymères de chlorure de vinyle.

Un autre objet de l'invention concerne les articles rigides ou souples ainsi que les plastisols obtenus à partir des compositions de polymères du chlorure de vinyle stabilisées à l'aide de ladite composition à base de maléates d'organoétain.

On connaît un certain nombre de maléates d'organoétain constituant de bons agents de thermostabilisation et de photostabilisation des polymères de chlorure de vinyle.

Ainsi, des compositions de maléates d'organoétain tels que le bis-(isooctylmaléate) de dibutylétain, l'oxyde de bis(isooctylmaléate) de dibutylétain sont décrites dans la littérature. L'utilisation de ces compositions en tant que stabilisants thermiques pour des composés organiques halogénés, notamment des polymères halogénés tels que le polychlorure de vinyle (PVC) et le polychlorure de vinyle chloré (CPVC), est également bien connue.

L'efficacité des stabilisants à base de maléate d'organoétain pour le PVC, notamment des articles destinés à une utilisation extérieure est bien connue.

Ainsi, dans l'article intitulé "Worldwide Weathering of Polyvinyl Chloride", par Emery Szabo et Robert Lally ; Polymer and Engineering Science, avril 1975, Vol. 15, n° 4, on présente les résultats d'études d'exposition climatique à long terme. Les compositions stabilisantes utilisées étaient des compositions de savons de baryum/cadmium, des compositions de maléates d'organoétain et des compositions de mercaptoacétates d'organoétain. On note dans les conclusions que le DBTM (maléate de dibutylétain) donne les meilleurs résultats en tant que stabilisant UV et que les mercaptoacétates d'organoétain donne les résultats les plus médiocres.

Bien que la supériorité des compositions de maléates d'organoétain soit depuis longtemps reconnue pour la stabilisation de formulations de PVC soumises au vieillissement climatique, ces compositions n'ont pas réussi à satisfaire pleinement les besoins du marché en raison de nombreux inconvénients.

Ainsi, le brevet GB 787 930 explique de la page 1 ligne 65 à la page 2 ligne 3, que le maléate de dibutylétain est difficile à disperser, et génère en outre lors de la transformation du PVC une fraction volatile d'anhydride maléique provoquant des effets lacrymogènes et irritants sur les personnes le manipulant. Afin de surmonter ces défauts, il est proposé dans le GB 787 930 des compositions d'hémiesters maléates d'organoétain liquides, telles que le bis(monobutylmaléate) de dibutylétain. La présence du groupement alcool de l'ester a pour effet de diminuer la teneur en étain, entraînant une stabilisation thermique moins importante, mais n'élimine pas la fraction volatile générée lors du mécanisme de stabilisation, c'est-à-dire la formation de l'hémiester d'acide maléique par la réaction du bis(monoalkylmaléate) d'organoétain avec l'HCl gazeux généré pendant la mise en oeuvre du PVC.

Le brevet US 3 296 289 décrit des compositions stabilisantes d'hémiester maléate de diorganoétain améliorées, dans la mesure où ces compositions, constituées par des bis(hémiesters maléate) de diorganoétain, sont solides à température ambiante. Une composition typique du brevet US 3 296 289 est le bis(cyclohexylmaléate) de dibutylétain, ayant un point de fusion de 71°C à 73°C comme décrit à l'exemple 1. Bien que les compositions d'hémiester maléate d'organoétain solides décrites dans ce brevet permettent de résoudre certains problèmes de manipulation, elles n'éliminent pas pour autant les composés volatiles irritants générés lorsque les compositions stabilisantes sont soumises aux conditions thermiques appliquées lors de la mise en oeuvre du PVC qui s'effectue aux environs de 200°C.

Ainsi, malgré plus de trente années de recherches, les stabilisants thermiques du PVC à base de maléates d'organoétain continuent d'avoir une utilisation limitée bien qu'ils présentent d'excellentes propriétés stabilisantes, et une très bonne résistance au vieillissement climatique. Leurs propriétés ne peuvent être considérées comme entièrement satisfaisantes dans la mesure où, lors de la mise en oeuvre, ils se décomposent en produits volatiles irritants et lacrymogènes.

WO 98/30531 et WO 98/30568 décrivent des compositions à base de maléate d'organoétains qui allient facilité de mise en oeuvre et absence de dégagement de produit lacrymogène pendant la transformation. Ces compositions se présentent sous forme solide et sont donc mal adaptées à des formulations types plastisols en particulier.

On a maintenant trouvé une composition de maléates d'organoétain liquide à température ambiante, aisément dispersable, notamment dans des formulations de type plastisols, et ne produisant pas de dégagements lacrymogènes et irritants lors de sa mise en oeuvre la rendant particulièrement bien adaptée pour la stabilisation de résines thermoplastiques ; la composition de maléates d'organoétain selon l'invention peut être obtenue en faisant réagir, éventuellement en milieu solvant et/ou en présence d'eau, un mélange constitué par au moins un composant RA avec l'anhydride et/ou l'acide maléique, puis en mettant en contact le milieu réactionnel ainsi obtenu avec au moins un oxyde de dialkylétain $(R1)_2 Sn=O$ et/ou ou au moins un chlorure d'alkylétain $(R1)_x SnCl_{4-x}$, où :

RA représente

- soit un alcool ROH où R représente un radical hydrocarboné aliphatique, linéaire ou ramifié, ayant un nombre d'atomes de carbone allant de 1 à 16 et, de préférence de 9 à 11, ou un mélange d'alcools ROH où R représente un radical hydrocarboné aliphatique, linéaire ou ramifié, de masse moléculaire supérieure ou égale à 32 et au plus égale à 242, de préférence allant de 144 à 172,
- soit un époxyalcane $C_nH_{2n}O$ dans lequel n va de 1 à 16, de préférence de 9 à 11, ou un mélange d'époxyalcanes de masse moléculaire supérieure ou égale à 30 et au plus égale à 240, de préférence allant de 142 à 170,
- soit un composé de type polyéthylène glycol ou polypropylène glycol ayant un nombre d'atomes de carbone allant de 2 à 16, de préférence allant de 9 à 11,

R1 représente un radical hydrocarboné aliphatique, linéaire ou ramifié, ayant un nombre d'atomes de carbone allant de 1 à 12, et de préférence égal à 1, 4 ou 8,
et x est un nombre entier égal à 1 ou 2.

La composition à base de maléates d'organoétain selon la présente invention peut être préparée selon le mode préféré consistant à d'abord chauffer le(s) composant(s) RA pour obtenir un milieu homogène et liquide ; ensuite, au mélange obtenu, porté à une température au moins égale à 50°C et, de préférence, comprise entre 70°C et 90°C, à ajouter l'anhydride et/ou l'acide maléique, en continu ou par portion, en une durée qui peut aller de 15 minutes à environ 1 heure, puis à ajouter au moins un oxyde de dialkylétain de formule $(R1)_2 Sn=O$, en continu ou par portion, en une durée en général au moins égale à 15 minutes, et, de préférence allant de 30 minutes à 90 minutes.

Le milieu réactionnel est ensuite maintenu à une température allant de 50°C à 100°C et, de préférence, comprise entre 75°C et 90°C, pendant une durée qui est au moins égale à 1 heure et de préférence comprise entre 2 et 4 heures.

L'eau formée au cours de la réaction ainsi que le solvant peuvent être éliminés par exemple par distillation sous pression réduite à une température allant de 70°C à 110°C et de préférence comprise entre 80°C et 100°C.

Si un solvant est utilisé, il doit être inerte vis-à-vis des réactifs et des produits formés.

A titre d'exemple de solvants utilisables selon la présente invention, on peut citer le toluène, les xylènes, l'heptane, le THF.

Selon la présente invention, on opère de préférence sous agitation et de manière avantageuse sous bullage de gaz inerte tel que l'azote.

On opère généralement à pression atmosphérique ($\approx 10^5$Pa), mais on ne sortirait pas du cadre de l'invention si on opérait à une pression différente, supérieure ou inférieure.

Dans le cas où l'on utilise des époxyalcanes comme composants RA, on opère en présence d'eau. Celle-ci peut être avantageusement introduite avant l'addition de l'anhydride et/ou de l'acide maléique.

A titre d'exemples de composants RA utilisables selon la présente invention, on peut citer les alcools tels que le méthanol, l'éthanol, le n-propanol, le n-butanol, le n-pentanol, le n-hexanol, le 2-éthylhexanol, le n-octanol, le n-nonanol, le n-décanol, le n-undécanol ou un mélange d'au moins deux des alcools précités ; les 1,2-époxyalcanes $C_nH_{2n}O$ tels que le 1,2-époxybutane, le 1,2-époxyhexane, le 1,2-époxyoctane, le 1,2-époxydécane ou un mélange d'au moins 2 des époxyalcanes précités ; les composés de type polyéthylène glycol ou polypropylène glycol tels que 2-(2-octyloxy)éthanol, 2-(2-hexyloxyéthoxy)éthanol, 2-(2-butyloxydiéthoxy) éthanol, 3-(3-heptyloxy) propanol, 3-(3-butyloxypropoxy)propanol. On utilise de préférence le 1-décanol.

Selon la présente invention, on utilise en général le composant RA et l'anhydride et/ou l'acide maléique dans un rapport molaire anhydride et/ou acide maléique/RA au moins égal à 0,8 et de préférence compris entre 1,0 et 1,8.

Selon la présente invention, on utilise de préférence pour 1 mole d'anhydride et/ou d'acide maléique au moins 0,50 mole d'oxyde(s) de dialkylétain $(R1)_2 Sn=O$ et avantageusement une quantité allant de 0,7 mole à 1,2 moles.

A titre d'exemples d'oxydes de dialkylétain utilisables selon la présente invention, on peut citer l'oxyde de diméthylétain, l'oxyde de dibutylétain, l'oxyde de dioctylétain, l'oxyde de dibutylétain étant tout particulièrement préféré.

On peut également utiliser lors de la préparation de la composition à base de maléates d'organoétain au moins un chlorure d'alkylétain $(R1)_x SnCl_{4-x}$ à la place de tout ou partie du ou des oxydes de dialkylétain $(R1)_2Sn=O$.

De préférence, on utilise un mélange de trichlorure de monoalkylétain $R1SnCl_3$ et de dichlorure de dialkylétain $(R1)_2SnCl_2$, les radicaux R1 du trichlorure et du dichlorure pouvant être identiques ou différents.

Dans ce cas, les chlorures formés lors de la préparation de la composition peuvent être neutralisés par un hydroxyde alcalin.

La composition à base de maléates d'organoétain selon la présente invention a de préférence une teneur pondérale en étain au moins égale à 15 % et avantageusement comprise entre 20 % et 30 %.

Sur la composition obtenue, on peut déterminer la teneur en étain par analyse élémentaire ; le spectre infrarouge de la composition selon l'invention se caractérise par :

- une bande d'absorption aux environs de 1730 cm$^{-1}$, caractéristique des fonctions esters,
- une bande d'absorption aux environs de 1580 cm$^{-1}$, caractéristique des carboxylates d'étain,
- une bande d'absorption aux environs de 680 cm$^{-1}$ caractéristique des liaisons $\equiv$ Sn — O — Sn $\equiv$.

La composition à base de maléates d'organoétain selon l'invention peut être obtenue selon une variante qui consiste à introduire après l'élimination éventuelle de l'eau formée et du solvant, un ou plusieurs costabilisants de différentes natures. A titre d'exemple de costabilisants utilisables selon la présente invention, on peut citer en premier lieu les huiles de soja époxydées ou non, les sels d'acides gras, de calcium et de zinc ; la quantité de ces costabilisants mise en oeuvre est en général au moins égale à 5% en poids, et de préférence comprise entre 7,5% et 12,5% par rapport aux réactifs mis en oeuvre (hors eau et solvant). A titre d'exemple de costabilisants utilisables selon la présente invention, on peut citer en second lieu des additifs de la famille des antioxydants, des absorbeurs d'UV, des phosphites organiques non hydrolysables, des β-dicétones tels que par exemple l'Irganox® 1076, le Tinuvin® P, le Tinuvin® 360, la BHT, la DHP ; ces costabilisants sont en général mis en oeuvre à raison d'au moins 0,1%, et de préférence de 0,2 à 5% en poids par rapport aux réactifs mis en oeuvre (hors eau et solvant)

Une fois cette addition effectuée, on maintient le milieu réactionnel sous agitation et chauffage jusqu'à obtention d'un mélange homogène.

On ne sortirait pas du cadre de l'invention en additionnant à la composition de maléates d'organoétain des plastifiants de polymères thermoplastiques tels que le phtalate de di-éthyl hexyle.

L'invention concerne également des formulations à base de résines thermoplastiques comprenant une ou plusieurs résines thermoplastiques et la composition à base de maléates d'organoétain telle que définie précédemment, appelée dans ce qui suit stabilisant. Les formulations selon l'invention présentent notamment une meilleure stabilité thermique et une meilleure stabilité à la lumière que les résines thermoplastiques desdites formulations mais non additivées avec le stabilisant selon l'invention.

La résine thermoplastique peut notamment consister en un ou plusieurs polymères choisis dans le groupe formé par les homopolymères du chlorure de vinyle qui peuvent être éventuellement surchlorés et les copolymères, éventuellement greffés, qui résultent de la copolymérisation du chlorure de vinyle avec un ou plusieurs comonomères éthyléniquement insaturés. A titre d'exemple de comonomères on peut notamment citer les halogénures de vinylidène comme le chlorure ou le fluorure de vinylidène, les carboxylates de vinyle comme l'acétate de vinyle, le propionate de vinyle, le butyrate de vinyle, les acides acrylique et méthacrylique ainsi que les nitriles, amides et esters d'alkyle qui en dérivent, notamment acrylonitrile, acrylamide, méthacrylamide, méthacrylate de méthyle, acrylate de méthyle, acrylate de butyle, acrylate d'éthyle, acrylate d'éthyl-2 hexyle, les dérivés vinylaromatiques tels que styrène, vinylnaphtalène, les oléfines telles que bicyclo(2.2.1)hept-2-ène, bicyclo(2.2.1)hepta-2,5-diène, éthylène, propène, butène-1.

L'invention concerne tout particulièrement les formulations à base d'homo- et de copolymères du chlorure de vinyle, éventuellement surchlorés.

Le stabilisant selon l'invention peut être utilisé en des quantités allant de 0,5 à 10 parties en poids, de préférence de 1 à 4 parties, pour 100 parties en poids de résine(s) thermoplastique(s)

Les formulations selon l'invention peuvent renfermer en outre, en fonction notamment des conditions de mise en oeuvre, de transformation et/ou des applications auxquelles elles sont destinées, un ou plusieurs additifs usuels tels que pigments, charges, lubrifiants, agents de mise en oeuvre, modifiants choc, antioxydants, plastifiants et agents gonflants.

Le stabilisant selon la présente invention peut être incorporé, en même temps et/ou avant les additifs mentionnés précédemment lorsqu'il en est fait usage.

Selon une mise en oeuvre particulièrement préférée, on effectue cette opération dans un mélangeur lent ou rapide et on introduit successivement la résine thermoplastique, le stabilisant selon l'invention puis les additifs et/ou charges, de façon à obtenir un mélange sous forme de poudre sec ou sous forme de pâte.

En règle générale, cette opération peut s'effectuer à température ambiante, l'opération elle-même pouvant provoquer une élévation de température jusqu'à 70°C, voire davantage.

L'action stabilisante à la chaleur et la lumière du stabilisant selon l'invention peut par exemple être mise en évidence pour les articles transformés par une mesure des coordonnées trichromatiques L*, a*, b*, par des tests de stabilité thermique statique au four, par la mesure du temps de stabilité résiduelle par un test de DHC, et en soumettant ces articles aux rayonnements UV.

L'addition du stabilisant selon la présente invention dans les formulations à base de résines thermoplastiques présente l'avantage de les stabiliser thermiquement et de les stabiliser contre le vieillissement climatique, sans présenter l'inconvénient dû aux dégagements de substances volatiles lacrymogènes et irritantes couramment observées avec les compositions de maléates d'organoétain de l'état de l'art lors de leur mise en oeuvre.

Le stabilisant selon la présente invention constitue un bon agent de thermostabilisation et de photostabilisation des polymères de chlorure de vinyle grâce à la structure spécifique des maléates d'organoétain qu'il contient. On constate que l'utilisation de stabilisants obtenus à partir de composants RA préférés cités plus haut mis en oeuvre avec des ratios [anhydride maléique]/[RA] et [anhydride maléique]/[(R$^1$)$_2$Sn=O] préférés également indiqués plus haut permet de limiter de façon très nette la formation d'esters volatils et de dérivés volatils de l'anhydride maléique lors de la mise en oeuvre de formulations à base de polymères de chlorure de vinyle.

Le stabilisant selon la présente invention qui se présente en général sous la forme d'un liquide visqueux conserve ses propriétés physico-chimiques dans le temps et se disperse aisément dans les formulations de résines thermoplastiques, notamment celles à base de polymères du chlorure de vinyle, et plus particulièrement dans le cas des formulations plastifiées, c'est-à-dire celles pour lesquelles un plastifiant est ajouté à la résine.

Le stabilisant selon la présente invention permet en outre de garantir une pleine efficacité des agents fongicides utilisés dans les formulations de polymères de chlorure de vinyle plastifiées destinées aux applications extérieures, contrairement aux stabilisants à base de mercaptans d'étain, dont le soufre inhibe l'activité enzymatique de ces mêmes fongicides.

On a enfin observé que le stabilisant selon l'invention présente une forte synergie en terme de stabilisation thermique des polymères de chlorure de vinyle lorsqu'ils sont additivés avec des costabilisants de type huile de soja époxydée et/ou des antioxydants, qu'ils soient introduits dans le stabilisant selon l'invention ou dans la formulation de polymère de chlorure de vinyle.

Les compositions thermoplastiques polymériques selon l'invention, notamment celles à base de PVC, peuvent être moulées par injection, moulées par rotation, calandrées puis thermoformées, extrudées, coextrudées, pressées sous forme d'articles tels qu'huisseries, profilés de fenêtres, feuilles, tubes ou, dans le cas de formulations de résines flexibles de type plastisols, mises en oeuvre selon les procédés d'enduction ou de trempage et transformées en articles tels que revêtements intérieurs et extérieurs, notamment des tissus enduits pour le bâtiment, la maroquinerie, etc. Les articles transformés peuvent être rigides ou souples, compacts ou expansés.

Les exemples qui suivent illustrent l'invention.

l Préparation des compositions de maléates d'organoétain conformes à l'invention

Les compositions de maléates d'organoétain ont été préparées en utilisant les réactifs suivants :

- 1-décanol,
- anhydride maléique,
- oxyde de dibutylétain.

Dans tout ce qui suit et sauf indication contraire les proportions sont exprimes en poids.

EXEMPLE 1

PREPARATION D'UN STABILISANT SELON L'INVENTION

Dans un réacteur double enveloppe de 500 ml muni d'une agitation, d'une gaine thermométrique, d'un condenseur équipé d'un Dean-Stark et d'une arrivée de gaz inerte, on introduit 125,7 g (0,796 mole) de 1-décanol.

L'alcool est chauffé vers 80°C et agité de manière à obtenir un milieu réactionnel liquide et homogène. Sous courant d'azote, on introduit 111,0 g (1,132 mole) d'anhydride maléique, en 5 portions pour une durée totale de 30 min, provoquant une légère exothermie à 85°C. On ajoute alors 213,3 g (0,857 mole) d'oxyde de dibutylétain en 5 portions pour une durée totale de 1 h. Le milieu réactionnel est maintenu sous agitation et sous courant d'azote pendant 3 h à 85°C.

On stoppe le chauffage et on laisse le milieu réactionnel revenir à température ambiante. On stoppe l'agitation et on coule le produit obtenu qui se présente sous la forme d'un liquide visqueux.

On obtient environ 445 g de stabilisant, soit un rendement pondéral voisin de 99 %. Le pourcentage pondéral d'étain du stabilisant ainsi obtenu est de 22,7 %. Le spectre infra-rouge présente une bande d'absorption à 1.729 cm$^{-1}$ correspondant aux fonctions esters, une bande d'absorption à 1.579 cm$^{-1}$ correspondant aux fonctions carboxylate d'étain -C(O)-O-Sn≡ et une bande d'absorption à 680 cm$^{-1}$ caractéristique des liaisons ≡Sn-O-Sn≡.

EXEMPLE 2

PREPARATION D'UN STABILISANT SELON L'INVENTION, UTILISANT UNE HUILE DE SOJA EPOXYDEE COMME COSTABILISANT.

On opère dans les mêmes conditions opératoires qu'à l'exemple 1 en utilisant des quantités de réactifs différentes, à savoir :

- 69,8 g (0,442 mole) de 1-décanol
- 61,7 g (0,629 mole) d'anhydride maléique,
- 118,5 g (0,476 mole) d'oxyde de dibutylétain.

Après les 3 h de maintien en température et sous agitation, on laisse redescendre la température autour de 70°C et on introduit progressivement toujours sous agitation 250 g d'Ecepox® PB1 (huile de soja époxydée)
Après homogénéisation du milieu réactionnel le produit est isolé comme dans l'exemple 1.
On obtient environ 495 g de stabilisant soit un rendement pondéral voisin de 99 %. Le pourcentage pondéral d'étain du stabilisant ainsi obtenu est de 11,3 %. Le spectre infra-rouge présente les mêmes bandes que celles du stabilisant de l'exemple 1.

II Préparation des formulations à base de PVC, ci-après désignées par formulations PVC contenant les stabilisants précédemment préparés.

Ci-dessous sont détaillés les noms commerciaux, les natures chimiques, les fournisseurs et les fonctions des différentes matières utilisées pour la préparation des formulations de PVC :

- LACOVYL® SO91, résine PVC de K Wert égal à 62, ATOFINA,
- LACOVYL® PS1050, résine PVC de K Wert égal à 64, ATOFINA,
- VINNOLIT® P70, résine PVC micro-suspension, VINNOLIT,
- CIRE OP, cire de montan, CLARIANT, lubrifiant,
- METABLEN® P551, polymère acrylique, METABLEN COMPANY B.V., agent de mise en oeuvre,
- PALATINOL® 911, phtalate, BASF, plastifiant,
- KRONOS® S2220, oxyde de titane, KRONOS, pigment,
- IRGANOX® 1076, antioxydant, CIBA.

EXEMPLE 3

PREPARATION D'UNE FORMULATION PVC DE TYPE SIMPLIFIE CONTENANT LES STABILISANTS PRECEDEMMENT PREPARES

On introduit dans un mélangeur rapide Henschel muni d'une double enveloppe avec une vitesse d'agitation de 3.800 trs/min :

- 100 parties de résine PVC (Lacovyl® SO91).

On observe une élévation de température.
A 60°C, on introduit 2,5 parties de stabilisant préparé à l'exemple 1 ou 2 puis à 65°C, on introduit 0,8 partie de cire de montan (cire OP)
A 80°C, on ajoute :

- 1 partie d'agent de mise en oeuvre (Metablen® P 551).

La formulation PVC est soumise à une agitation de 3.800 trs/min jusqu'à atteindre une température de 110°C, puis elle est refroidie en réduisant l'agitation à 1.500 trs/min et en faisant circuler un courant d'eau froide dans la double enveloppe du mélangeur.
La formulation obtenue est recueillie lorsque la température atteint environ 45°C.

EXEMPLE 4

PREPARATION D'UNE FORMULATION PVC DE TYPE PLASTISOL CONTENANT LES COMPOSITIONS DE MALEATES D'ORGANOETAIN PRECEDEMMENT PREPAREES

Dans un mélangeur lent planétaire Kenwood, on introduit avec une vitesse d'agitation d'environ 200 trs/min :

- 70 parties de résine PVC (Vinnolit® P70),
- 30 parties de résine PVC (Lacovyl® PS1050),
- 10 parties d'un mélange préalablement préparé comprenant 30 parties d'oxyde de titane (Kronos® S2220) et de 70 parties de plastifiant (Palatinol® 911)
- 60 parties de plastifiant (Palatinol® 911).

On laisse sous agitation pendant environ 20 min.

Le mélange est alors introduit dans un réacteur de 500 ml muni d'une agitation et d'un condenseur. On ajoute à ce mélange le stabilisant de l'exemple 1 ou 2 ainsi que d'éventuels costabilisants. A froid, sous agitation très lente, et sous une pression de $6,66.10^3$ Pa, le mélange est soumis à une opération de débullage pendant environ 40 min.

III Evaluation des stabilités thermiques et dynamiques, et des propriétés de résistance au vieillissement UV des formulations PVC contenant les stabilisants selon l'invention

On désigne par :

- Formulation PVC 1, la formulation PVC de l'exemple 3 contenant 2,5 parties du stabilisant de l'exemple 1,
- Formulation PVC 2, la formulation de l'exemple 4 contenant 3 parties du stabilisant de l'exemple 1,
- Formulation PVC 3, la formulation de l'exemple 4 contenant 6 parties du stabilisant de l'exemple 2,
- Formulation PVC 4, la formulation de l'exemple 4 contenant 6 parties du stabilisant de l'exemple 2 ainsi que 0,05 partie d'antioxydant (Irganox® 1076).
- Formulation PVC 5, la formulation de l'exemple 4 contenant 3 parties du stabilisant de l'exemple 1 qui a été conservée pendant une période de 8 mois après la synthèse à température ambiante.

EXEMPLE 5

EVALUATION DE LA STABILITE THERMIQUE DYNAMIQUE DE LA FORMULATION PVC1

On réalise un test de stabilité thermique dynamique sur la formulation PVC 1 qui permet de mettre en évidence l'effet stabilisant remarquable apporté par la composition telle qu'obtenue selon l'exemple 1 :

150 g de la formulation PVC 1 sont placés dans un malaxeur à cylindres COLLIN dont les rouleaux sont portés à 200°C. Les vitesses de rotation des 2 cylindres sont respectivement réglées à 20 trs/min et 24 trs/min de manière à gélifier puis travailler la matière entre les cylindres en apportant un travail mécanique de friction. L'écartement entre les cylindres est réglé à 0,75 mm.

Des échantillons sont prélevés sur les cylindres à intervalles de temps réguliers en notant leur coloration.

Les indices de jaune (YI, norme ASTM E313) mesurés sur chaque échantillon prélevé à l'aide d'un spectrocolorimètre Minolta Chromameter CR200, sont réunis dans le tableau 1.

TABLEAU 1

| Temps écoulé depuis le début du malaxage (min) | Indice de jaune YI |
|---|---|
| 2 | 3,72 |
| 3 | 4,31 |
| 4 | 5,76 |
| 5 | 6,51 |
| 6 | 7,15 |
| 7 | 8,72 |
| 8 | 9,56 |
| 9 | 10,47 |
| 10 | 11,72 |
| 12 | 14,09 |

Lors de ces essais, on constate qu'il n'y a pas de dégagement de produit volatil irritant et lacrymogène qui se dégage lors de la mise en oeuvre sur le malaxeur bi-cylindre. On constate également les bonnes propriétés de stabilisation thermique du stabilisant de l'exemple 1.

<u>EXEMPLE 6</u>

EVALUATION DE LA STABILITE THERMIQUE STATIQUE EN ENDUCTION DES FORMULATIONS PVC 2 ET PVC 3

Environ 20 g de chacune des formulations PVC 2 et PVC 3 sont versés sur un papier spécifique destiné au procédé d'enduction. La pâte ainsi coulée sur le papier est étalée sur une surface d'environ 20 $cm^2$ et une épaisseur d'environ 0,7 mm avant d'être introduite dans un four de type Werner Mathis LTF-ST porté à une température de 190°C.
Des échantillons sont prélevés sur la feuille d'enduction à intervalles de temps réguliers en notant leur coloration.
Les indices YI et a* mesurés sur chaque échantillon prélevé, à l'aide d'un spectrocolorimètre Minolta Chromameter CR200 (norme ASTM E313) sont réunis dans le tableau 2.

TABLEAU 2

| Durée de séjour dans le four (min) | Formulation PVC 2 | | Formulation PVC 3 | |
|---|---|---|---|---|
| | YI | a* | YI | a* |
| 1 | 3,32 | -1,07 | 3,44 | -1,00 |
| 5 | 6,77 | -1,69 | 6,42 | -1,52 |
| 10 | 11,25 | -2,44 | 12,13 | -2,48 |
| 15 | 15,62 | -2,90 | 17,13 | -2,98 |
| 30 | 28,81 | 2,02 | 25,61 | -2,14 |

Sur les échantillons prélevés après 1 min, on mesure la stabilité résiduelle, exprimée en min, et mesurée à l'aide d'un banc de déhydrochloruration (DHC) selon la norme ISO 182-2. Les résultats sont présentés dans le tableau 3.

TABLEAU 3

| | Formulation PVC 2 | Formulation PVC 3 |
|---|---|---|
| DHC (min) | 44,4 | 53,4 |

Les résultats de stabilité statique au four Werner Mathis (tableau 2) et de stabilité résiduelle selon le test de DHC (tableau 3) mettent en évidence les bonnes propriétés de stabilisation thermique des stabilisants selon l'invention, ainsi que l'effet costabilisant de l'huile de soja époxydée (formulation PVC 3)
Par ailleurs, lors de la mise en oeuvre selon le procédé d'enduction des formulations PVC 2 et PVC 3, on constate l'absence de dégagement de substance lacrymogène et irritante.
Les échantillons prélevés à 1 min sont exposés durant 3.946 h en enceinte de photovieillissement accéléré de type Xenotest 1200, selon la norme ISO/4892. A intervalles de temps réguliers, on mesure les coordonnées trichromatiques L*, a*, b* à l'aide d'un spectrocolorimètre Minolta Chromameter CR200. On désigne par :

- $\Delta L^*$ : la différence entre la valeur de l'indice L* mesuré au temps t et la valeur de l'indice L* mesuré avant la mise en exposition en enceinte de photovieillissement,
- $\Delta a^*$ : la différence entre la valeur de l'indice a* mesuré au temps t et la valeur de l'indice a* mesuré avant la mise en exposition en enceinte de photovieillissement,
- $\Delta b^*$ : la différence entre la valeur de l'indice b* mesuré au temps t et la valeur de l'indice b* mesuré avant la mise en exposition en enceinte de photovieillissement.

On calcule l'indice d'évolution colorimétrique $\Delta E^*$ selon la formule :

$$\Delta E^* = \sqrt{(\Delta L^*)^2 + (\Delta a^*)^2 + (\Delta b^*)^2}.$$

Les résultats sont réunis dans le tableau 4.

TABLEAU 4

| Durée d'exposition (h) | Formulation PVC 2 | Formulation PVC 3 |
|---|---|---|
| 92 | 1,11 | 1,01 |
| 504 | 0,96 | 1,25 |
| 1037 | 0,99 | 1,16 |
| 1477 | 0,88 | 1,18 |
| 2049 | 0,87 | 1,25 |
| 2447 | 0,82 | 0,97 |
| 3013 | 0,68 | 0,90 |
| 3522 | 0,79 | 1,10 |
| 3946 | 0,62 | 0,92 |

Les excellentes propriétés de photostablisation des stabilisants selon l'invention sont mises en évidence par les très faibles valeurs de ΔE* obtenues après exposition en enceinte de photovieillissement accéléré.

EXEMPLE 7

EVALUATION DE LA STABILITE THERMIQUE STATIQUE EN ENDUCTION DES FORMULATIONS PVC 2, PVC 3 ET PVC 4

Les formulations PVC 2, PVC 3, PVC 4 et PVC 5 sont mises en oeuvre conformément au mode opératoire détaillé à l'exemple 6. De la même manière, des échantillons sont prélevés sur la feuille d'enduction à intervalles de temps réguliers en notant leur coloration.

Les indices colorimétriques (YI et a*, norme ASTM E313) mesurés sur chaque échantillon prélevé, à l'aide d'un spectrocolorimètre Minolta Chromameter CR200, sont réunis dans le tableau 5.

TABLEAU 5

| Durée de séjour dans le four (min) | Formulation PVC 2 | | Formulation PVC 3 | | Formulation PVC 4 | | Formulation PVC 5 | |
|---|---|---|---|---|---|---|---|---|
| | YI | a* | YI | a* | YI | a* | YI | a* |
| 1 | 4,95 | -1,00 | 5,40 | -1,02 | 4,89 | -0,94 | 5,11 | -0,95 |
| 5 | 7,33 | -1,31 | 8,13 | -1,31 | 6,41 | -0,99 | 7,33 | -1,26 |
| 10 | 11,67 | -1,57 | 12,65 | -1,85 | 7,96 | -1,01 | 12,00 | -1,81 |
| 15 | 15,84 | -1,84 | 16,76 | -1,83 | 9,90 | -1,19 | 15,76 | -1,87 |
| 30 | 25,15 | 0,40 | 24,60 | -0,96 | 17,15 | -1,27 | 23,93 | -0,32 |

Les résultats de stabilité statique au four Werner Mathis mettent en évidence les bonnes propriétés de stabilisation thermique des stabilisants selon l'invention ainsi que les effets costabilisants de l'huile de soja époxydée et d'un antioxydant.

On constate également que la composition de maléate d'organoétain telle qu'obtenue selon l'exemple 1 conserve ses propriétés de stabilisation thermique du PVC dans le temps.

Par ailleurs, lors de la mise en oeuvre selon le procédé d'enduction des formulations PVC 2, PVC 3, PVC 4 et PVC 5, on montre l'absence de dégagement de substance lacrymogène et irritante.

EXEMPLE 8

EVALUATION ET ANALYSE DU DEGAGEMENT DE COMPOSES VOLATILS LORS D'UN TRAITEMENT DE DECOMPOSITION THERMIQUE EFFECTUE SUR LE STABILISANT DE L'EXEMPLE 1

L'analyse qualitative du dégagement de composés volatils est réalisée par thermodésorption à 190°C durant 2 min sur un échantillon de 10 µl. On utilise un injecteur automatique phase solide en mode thermodésorbeur monté sur un chromatographe en phase gaz muni d'un détecteur à ionisation de flamme. L'identification des volatils est réalisée par un couplage chromatographie en phase gaz/spectrométrie de masse. Les composés volatils ont été identifiés tant pour le stabilisant de l'exemple 1 de la présente invention que pour un maléate liquide standard de l'état de l'art vendu par la société Crompton sous la dénomination Mark T9 (di butyl étain de méthyle ou d'éthyle)

TABLEAU 6

| Stabilisant de l'exemple 1 | | Maléate liquide standard du marché | |
|---|---|---|---|
| Identification | Quantité estimée | Identification | Quantité estimée |
| | | M=32<br>$CH_3OH$<br>Méthanol | |
| | | M=46<br>Traces de $C_2H_5OH$ | |
| M=134<br>$HOOC-CH_2-CHOH-COOH$<br>Acide hydroxysuccinique | Trace | M=134<br>$HOOC-CH_2-CHOH-COOH$<br>Acide hydroxysuccinique | Majoritaire |
| | | M=144<br>$H_3COOC-CH=CH-COOCH_3$<br>Maléate de méthyle | Majoritaire |
| M=158<br>$C_{10}H_{21}OH$<br>1-décanol | Largement majoritaire | M=176<br>$H_3COOC-CH_2-CHOHOCH_3-COOCH_3$ | |
| | | M=172<br>$H_5C_2OOC-CH=CH-COOC_2H_5$<br>Maléate d'éthyle | |
| | | M=220<br>Ionol<br>(3-méthyl-2,5-diterbutylphénol) | Majoritaire |

L'analyse quantitative des composés volatils est réalisée par chromatographie phase gaz (solubilisation préalable des échantillons dans le toluène à raison de 3g/l) Après évaporation du solvant, le dépôt est désorbé thermiquement dans l'injecteur du chromatographe à 190°C. Les composés sont condensés en tête de colonne froide (40°C) pendant 2 min, puis élués par chauffage progressif de la colonne (20° C/min.) jusqu'à 280°C. Les résultats obtenus sont réunis dans le tableau 7 :

TABLEAU 7

| | |
|---|---|
| Perte de poids (%) du stabilisant de l'exemple 1 (selon l'invention) | 9 |
| Perte de poids (%) d'un maléate liquide standard du marché (comparatif) | 18 |

L'analyse des composés volatils ne met pas en évidence la présence de produits irritants en quantité significative mais uniquement à l'état de traces (acide hydroxysuccinique) A l'inverse, le maléate liquide standard du marché conduit à la formation de composés volatils irritants en quantité importante (acide hydroxysuccinique, maléate de méthyle) La quantité globale de composés volatils formés est significativement différente pour la synthèse des maléates d'étain de la présente invention et les maléates standards.

**Revendications**

1.   Procédé de préparation d'une composition de maléates d'organoétain, **caractérisé en ce qu'**il comprend les étapes suivantes :

réaction d'un mélange constitué par au moins un composant RA avec l'acide et/ou l'anhydride maléique, puis mise en contact du milieu réactionnel ainsi obtenu avec au moins un oxyde de dialkyl étain $(R^1)_2 Sn = O$ et/ou avec au moins un chlorure d'alkylétain $(R^1)_x SnCl_{4-x}$, dans lequel

RA représente

- soit un alcool ROH où R représente un radical hydrocarboné aliphatique, linéaire ou ramifié, ayant un nombre d'atomes de carbone allant de 9 à 11, ou un mélange d'alcools ROH où R représente un radical hydrocarboné aliphatique, linéaire ou ramifié, ayant un nombre d'atomes de carbone allant de 2 à 16, de préférence de 9 à 11, de masse moléculaire allant de 144 à 172,
- soit un époxyalcane $C_nH_{2n}O$ avec n pouvant aller de 9 à 11 ou un mélange d'époxyalcanes $C_nH_{2n}O$ avec n pouvant aller de 2 à 16, de préférence de 9 à 11, de masse moléculaire allant de 142 à 170,
- soit un composé de type polyéthylène glycol ou polypropylène glycol ayant un nombre de carbones allant de 9 à 11,

$R^1$ représente un radical hydrocarboné aliphatique, linéaire ou ramifié, ayant un nombre d'atomes de carbone allant de 1 à 12, et de préférence égal à 1, 4 ou 8, x est un nombre entier égal à 1 ou 2.

2.   Procédé selon la revendication 1, **caractérisée en ce que** la réaction a lieu en présence d'un solvant, de préférence d'eau.

3.   Procédé selon la revendication 1 ou 2, **caractérisé en ce qu'**on ajoute au(x) composant(s) RA, préalablement portés à une température au moins égale à 50°C et, de préférence, comprise entre 70°C et 90°C, l'anhydride et/ou l'acide maléique en une durée de préférence comprise entre 15 minutes et 1 heure, puis ensuite à ajouter un oxyde de dialkylétain $(R^1)_2Sn=O$ en une durée de préférence comprise entre 15 minutes et à 90 minutes et à chauffer le milieu réactionnel ainsi obtenu à une température de préférence comprise 50 et 100°C et, de préférence, comprise entre 75°C et 90°C, pendant une durée allant de 1 h à 4 h et à éliminer l'eau formée ainsi que le solvant éventuel sous pression réduite à une température de préférence comprise entre 70 et 110°C et de préférence comprise entre 80°C et 100°C.

4.   Procédé selon l'une des revendications 1 à 3, **caractérisé en ce que** l'on opère en présence d'au moins un costabilisant, de préférence une huile de soja époxydée et/ou un antioxydant.

5.   Composition de maléates d'organoétain susceptible d'être obtenue selon l'une des revendications 1 à 4.

**6.** Composition selon la revendication 5 **caractérisée en ce que** le rapport molaire anhydride et/ou acide maléique/RA est au moins égal à 0,8 et de préférence compris entre 1,0 et 1,8.

**7.** Composition selon l'une des revendications 5 ou 6, **caractérisée en ce que** l'on utilise pour 1 mole d'anhydride et/ou d'acide maléique, au moins 0,50 mole d'oxyde de dialkylétain $(R^1)_2Sn = 0$ et, de préférence, une quantité allant de 0,7 mole à 1,2 mole.

**8.** Composition selon l'une des revendications 5 à 7, **caractérisée en ce que** le composé RA est un alcool ROH, de préférence le 1-décanol.

**9.** Composition selon l'une des revendications 5 à 8, **caractérisée en ce que** l'oxyde de dialkylétain est l'oxyde de dibutylétain.

**10.** Composition selon l'une quelconque des revendications 5 à 8,
**caractérisée en ce que** l'on utilise un mélange de dichlorure de dialkylétain $(R1)_2 SnCl_2$ et de trichlorure de monoalkylétain $R1SnCl_3$.

**11.** Formulation à base de résine thermoplastique renfermant à titre de stabilisant une composition de maléates d'organoétain selon l'une des revendications 5 à 10.

**12.** Formulation selon la revendication 11, **caractérisé en ce que** la résine thermoplastique est un homo- ou copolymère du chlorure de vinyle.

**13.** Article enduit obtenu par enduction ou trempage d'au moins une de ses surfaces avec une formulation selon la revendication 11 ou 12, de préférence sous forme de plastisol, tel que tissu enduit, revêtement intérieur et extérieur pour le bâtiment, la maroquinerie.

**14.** Article rigide ou souple, compact ou expansé, obtenu par mise en forme, notamment par (co)extrusion, moulage, injection, pressage, calandrage et thermoformage d'une formulation selon la revendication 10 ou 11, tel que huisserie, profilé de fenêtres, feuille, film, tube.

**Office européen des brevets**

## RAPPORT DE RECHERCHE EUROPEENNE

Numéro de la demande

EP 01 40 2645

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DATABASE CHEMABS 'en ligne! CHEMICAL ABSTRACTS SERVICE, COLUMBUS, OHIO, US; SUGINO, TOMOSHIGE ET AL: "Stabilizing chlorine-containing resins" retrieved from STN Database accession no. 80:4355 XP002168287 * abrégé * & JP 47 040546 B (TOKYO FINE CHEMICAL CO., LTD.) 13 octobre 1972 (1972-10-13) | 1-3,5-9 | C08K5/57 C07F7/22 |
| X | DATABASE CHEMABS 'en ligne! CHEMICAL ABSTRACTS SERVICE, COLUMBUS, OHIO, US; KIZLINK, JURAJ ET AL: "Combined organotin compounds" retrieved from STN Database accession no. 103:123710 XP002168288 * abrégé * & CS 216 891 B (CZECH.) 26 novembre 1982 (1982-11-26) | 1-9, 11-14 | |
| X,D | WO 98 30531 A (MOREL PATRICK ;ATOCHEM ELF SA (FR); CUILLERET MURIEL (FR); ATOCHEM) 16 juillet 1998 (1998-07-16) * page 10 - page 22 * * page 23 - page 27; revendications 1-33 * | 1-14 | |
| X,D | WO 98 30568 A (MOREL PATRICK ;ATOCHEM ELF SA (FR); CUILLERET MURIEL (FR); ATOCHEM) 16 juillet 1998 (1998-07-16) * page 10 - page 17; exemples 1-4 * * page 18 - page 21; revendications 1-27 * | 1-14 | |

-/--

**DOMAINES TECHNIQUES RECHERCHES (Int.Cl.7)**

C08K
C07F
C08L
C08J

Le présent rapport a été établi pour toutes les revendications

| Lieu de la recherche | Date d'achèvement de la recherche | Examinateur |
|---|---|---|
| LA HAYE | 23 novembre 2001 | Bader, K |

EPO FORM 1503 03.82 (P04C02)

**Office européen des brevets**

**RAPPORT DE RECHERCHE EUROPEENNE**

Numéro de la demande

EP 01 40 2645

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X,D | GB 787 930 A (KONINK IND MIJ VOORHEEN NOURY) 18 décembre 1957 (1957-12-18) * page 2 * | 1-3,5-9 | |
| X,D | US 3 296 289 A (M&T CHEMICALS) 3 janvier 1967 (1967-01-03) * colonne 3 - colonne 4; exemples 1-3 * | 1-3,5-9 | |
| X | US 3 933 743 A (COATES HAROLD ET AL) 20 janvier 1976 (1976-01-20) * colonne 7 - colonne 9; exemples 1-5 * | 1-3,5-9, 11,12 | |
| X | DE 23 03 179 A (GOODYEAR TIRE & RUBBER) 23 août 1973 (1973-08-23) * le document en entier * | 1-12 | |
| X | DD 254 385 A (GREIZ DOELAU CHEMIE) 24 février 1988 (1988-02-24) * page 2 - page 3 * | 1-9, 11-14 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 23 novembre 2001 | Bader, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
             
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**      EP 01 40 2645

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-11-2001

| Document brevet cité au rapport de recherche | | Date de publication | Membre(s) de la famille de brevet(s) | | Date de publication |
|---|---|---|---|---|---|
| JP 47040546 | B | | AUCUN | | |
| CS 216891 | B | 26-11-1982 | CS | 216891 B1 | 26-11-1982 |
| WO 9830531 | A | 16-07-1998 | FR | 2758142 A1 | 10-07-1998 |
| | | | AT | 205821 T | 15-10-2001 |
| | | | AU | 736440 B2 | 26-07-2001 |
| | | | AU | 5564798 A | 03-08-1998 |
| | | | CN | 1248965 A | 29-03-2000 |
| | | | DE | 69706887 D1 | 25-10-2001 |
| | | | EP | 0963368 A1 | 15-12-1999 |
| | | | WO | 9830531 A1 | 16-07-1998 |
| | | | JP | 2001508434 T | 26-06-2001 |
| | | | NO | 993374 A | 03-09-1999 |
| | | | US | 6156832 A | 05-12-2000 |
| WO 9830568 | A | 16-07-1998 | FR | 2758141 A1 | 10-07-1998 |
| | | | AU | 735757 B2 | 12-07-2001 |
| | | | AU | 5564898 A | 03-08-1998 |
| | | | CN | 1248975 A | 29-03-2000 |
| | | | EP | 0963375 A1 | 15-12-1999 |
| | | | WO | 9830568 A1 | 16-07-1998 |
| | | | JP | 2001508059 T | 19-06-2001 |
| | | | NO | 993375 A | 03-09-1999 |
| | | | US | 5985967 A | 16-11-1999 |
| GB 787930 | A | 18-12-1957 | BE | 541826 A | |
| | | | DE | 1569070 A1 | 09-04-1970 |
| | | | FR | 1133139 A | 21-03-1957 |
| | | | NL | 87074 C | |
| US 3296289 | A | 03-01-1967 | BE | 661480 A | 16-07-1965 |
| | | | NL | 6413688 A | 26-05-1966 |
| | | | US | 4418169 A | 29-11-1983 |
| | | | BE | 661478 A | 16-07-1965 |
| | | | BE | 661479 A | 16-07-1965 |
| | | | CH | 450712 A | 31-01-1968 |
| | | | DE | 1569136 A1 | 02-04-1970 |
| | | | DE | 1569170 A1 | 02-07-1970 |
| | | | FR | 87606 E | 15-12-1966 |
| | | | FR | 1447914 A | 09-11-1966 |
| | | | GB | 1060067 A | 22-02-1967 |
| | | | GB | 1009368 A | 10-11-1965 |
| | | | NL | 297476 A | |
| US 3933743 | A | 20-01-1976 | GB | 1439752 A | 16-06-1976 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 01 40 2645

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-11-2001

| Document brevet cité au rapport de recherche | | Date de publication | Membre(s) de la famille de brevet(s) | | Date de publication |
|---|---|---|---|---|---|
| US 3933743 | A | | CA | 1017349 A1 | 13-09-1977 |
| | | | US | 3978102 A | 31-08-1976 |
| DE 2303179 | A | 23-08-1973 | AR | 193333 A1 | 11-04-1973 |
| | | | AU | 5123073 A | 18-07-1974 |
| | | | BE | 794869 A1 | 29-05-1973 |
| | | | DE | 2303179 A1 | 23-08-1973 |
| | | | FR | 2177727 A1 | 09-11-1973 |
| | | | IT | 977053 B | 10-09-1974 |
| | | | JP | 48093638 A | 04-12-1973 |
| | | | NL | 7302075 A | 16-08-1973 |
| | | | ZA | 7300381 A | 31-10-1973 |
| DD 254385 | A | 24-02-1988 | DD | 254385 A1 | 24-02-1988 |

EPO FORM P0460

Pour tout renseignement concernant cette annexe : voir Journal Officiel de l'Office européen des brevets, No.12/82